# EUROPEAN PATENT SPECIFICATION

(11) **EP 4 519 193 B1**
(45) Date of publication and mention of the grant of the patent: **02.09.2026**
(21) Application number: 23726625.9
(22) Date of filing: 04.05.2023
(51) Int. Cl.: B65H 49/12, B65H 49/08, B23K 9/133, B65H 57/06

(54) **ENDLESS WIRE TAB FOR WELDING WIRE CONTAINERS**
ENDLOSDRAHTLASCHE ZUM SCHWEISSEN VON DRAHTBEHÄLTERN
LANGUETTE CONTINUE POUR FIL POUR CONTENANTS DE FILS DE SOUDAGE

(30) Priority: 06.05.2022 US 202263339218 P
(43) Date of publication of application: 12.03.2025
(73) Proprietor: ESAB AB, 402 77 Gothenburg (SE)
(72) Inventor: KLAES, Gerard F., 40277 Gothenburg (SE); REP, Rodolfo F., 40277 Gothenburg (SE); GUERRERO KEES, Roberto Carlos, 40277 Gothenburg (SE); GIMSTRÖM, Claes, 40277 Gothenburg (SE)
(74) Representative: Murgitroyd & Company
(86) International application number: PCT/IB2023/054664
(87) International publication number: WO 2023/214355

(56) References cited:
- JP-A- 2000 225 468
- JP-A- 2005 305 458
- JP-A- 2006 015 368
- JP-A- H07 136 763
- JP-U- S6 084 185
- KR-A- 20020 019 321
- US-A1- 2006 278 747

## Description

### TECHNICAL FIELD

The present disclosure is directed toward welding wire containers, and, in particular, a tab to facilitate the packaging and unwinding of welding wire from a bulk welding wire coil disposed in the welding wire container, particularly when the welding wire container is installed in an endless system.

### BACKGROUND OF THE INVENTION

Welding wire for automatic or semi-automatic welding processes is often provided in bulk and in the form of a welding wire coil. The welding wire coil is often disposed within a welding wire container that facilitates the transportation, storage, and use of the welding wire coil. The welding wire container may facilitate protection of the welding wire coil during transportation and/or storage of the welding wire coil. In addition, the welding wire container may serve as a delivery device that allows continuous withdrawal of the welding wire from the coil within the welding wire container.

Some bulk welding wire containers may be set up to be used in an "endless" system. In an endless system, two bulk welding wire containers are placed side by side, and the system allows the feeding of welding wire to transfer from one container to the other as the wire is fully consumed from one of the containers. This is accomplished by first welding the finishing end of the welding wire of the first container to the beginning end of the welding wire of the second container (i.e., butt welding) in order to create an "endless wire" welding wire supply. With the welding wires of the two containers connected, as the welding wire is fully consumed from the first container, the system seamlessly switches to consuming the welding wire from the second container. This endless system reduces the amount of downtime caused by having to change out one bulk welding wire container for another.

Welding wire containers that are configured to operate in an endless system may be equipped with a number of endless tabs. The endless tabs may be disposed within the welding wire container and are configured to hold in place the end loops of the welding wire disposed within the welding wire container so that the end loops can be easily accessed by an operator of the welding wire container. However, current iterations of the endless tab are formed in/cut from the inner liner disposed within the bulk welding wire container. This configuration limits the strength of the endless tab to the strength of the inner liner as they are formed from the same material. In addition, the endless tabs in this configuration are susceptible to breaking or deformation in transit, due to the limited strength of the inner liner/tab, and due to the welding wire coil shifting up and down within the container and liner. In other words, as the wire coil moves up and down during transit, the wire coil, or the decoiling cone disposed atop the wire coil, can impact the endless tabs, which can cause the endless tabs to break or deform. Breaking or deforming the endless tab may cause the end of the welding wire to fall into the center cavity of the wire coil, which makes setup difficult and may potentially cause tangles. Furthermore, because the endless tab is formed in/cut from the inner liner of the welding wire container, when larger sized tabs are needed for higher gauged welding wires, the larger sized endless tabs are located lower in the drum than those of smaller sized endless tabs. Because the larger sized endless tabs extend lower into the drum, the larger sized endless tabs are more susceptible to impact from the wire coil/wire stack. In addition, endless tabs formed within/cut from the liner limit the ability to customize the number of endless tabs, and ultimately the welding wire container, to the different gauges of the welding wire capable of being disposed within the welding wire container (e.g., smaller gauged wires may require less endless tabs than larger gauged wires). Finally, with endless tabs being formed in/cut from the liner of a welding wire container, the types of containers able to be utilized in an endless system are limited to those with inner liners. This prevents other types of welding wire containers (e.g., circular/round drums) from being utilized in an endless system.

Thus, what is needed is a new endless tab that is a separate and stand-alone unit from the container sidewalls, but that can be attached to the sidewalls of the container or any liner disposed within the container. What is further needed is a new endless tab that can be applied to any type of welding wire container, regardless of the shape, dimensions, and material of the welding wire container. Even further, what is needed is an endless tab system that enables each welding wire container to be configured with the necessary number of endless tabs for the gauge of the wire disposed within the welding wire container without altering the welding wire container, and without having to have multiple versions of a welding wire container/liner for different gauges of welding wire. In addition, what is needed is an endless tab that is constructed from a different material than that of the welding wire container. Finally, what is needed is an endless tab that can be positioned at or near the top end of the welding wire container.

JP H07 136763 A discloses a continuous wire system according to the preamble of claim 1.

### SUMMARY OF THE INVENTION

The present disclosure is directed toward a standalone endless tab for a welding wire container. The endless tab may be constructed from a planar sheet of corrugated material that is folded into a deployed configuration for the endless tab. In some embodiments, the endless tab in the planar unfolded configuration may be substantially U-shaped. The endless tab may include a first connection portion, a second connection portion and an extension portion. The first and second connection portions may be disposed on opposing sides of the endless tab, and the extension portion may be disposed between the first and second connection portions. When the endless tab is in the folded or deployed configuration, the first and second connection portions may each have a substantially inverted U-shape cross-section, while the extension portion may extend horizontally from the front side of the connection portions. The first and second connection portions may be configured to extend over a top edge of a liner and/or support of the welding wire container, while the extension portion may extend into the interior of the welding wire container. The extension portion may include at least an opening through which a welding wire may be looped, passed, or threaded. Any number of endless tabs may be installed or coupled to the welding wire container in any position along a top edge of one of the liners and/or supports of the welding wire container. Moreover, the endless tabs may be coupled to the welding wire container via adhesives, bonding, or any other fastening device.

According to the present invention there is provided a continuous wire system as recited in claim 1. The continuous wire system comprises a first wire container having a first sleeve defining a first cavity, the wire container including a first tab mounted to the first sleeve, the first tab including a first connection portion, a second connection portion, and a first extension portion coupled to and extending away from each of the first connection portion and the second connection portion, the first extension portion including an opening formed therein, the first connection portion and the second connection portion being coupled to the first sleeve, a first wire disposed in the first cavity of the first wire container, at least a portion of the first wire inserted into the opening of the first extension portion and extending therethrough, a second wire container having a second sleeve defining a second cavity, and a second wire disposed in the second cavity of the second wire container, wherein the second wire is connected to the first wire. The first tab is formed of a single piece of material, and the first connection portion, the second connection portion, and the first extension portion are different sections of the single piece of material. The first connection portion is coupled to the first extension portion by a first living hinge, and the second connection portion is coupled to the first extension portion by a second living hinge.

In an embodiment, the first wire is arranged in a coiled configuration in the first wire container, and the second wire is arranged in a coiled configuration in the second wire container. In another embodiment, the first wire container further comprises a second tab including a third connection portion, a fourth connection portion, and a second extension portion, the third connection portion and fourth connection portion being coupled to the second sleeve, the second tab being coupled to the second sleeve at a location spaced apart from the first tab, the second extension portion including an opening formed therein, wherein at least a portion of the first wire is inserted into the opening of the second extension portion and extends therethrough.

In yet another embodiment, multiple portions of the first wire extend through the opening of the first extension portion simultaneously, and multiple portions of the first wire extend through the opening of the second extension portion simultaneously. In another embodiment, the first extension portion has a slit formed therein, the slit is in communication with the opening in the first extension portion, and the slit is configured so that the first wire can pass therethrough to the opening of the first extension portion.

In another embodiment, the first extension portion includes a first panel and a second panel, the second panel being coupled to the first panel by a third living hinge that permits the second panel and the first panel to be folded so they are adjacent each other. In yet another embodiment, the piece of material comprises cardboard and has a collapsed configuration and a folded configuration, and the piece of material is flat in its collapsed configuration. Alternatively, the first wire container has a third sleeve, the third sleeve being located in the first sleeve, each of the first sleeve and the third sleeve has at least one sidewall, and the first tab is coupled to a sidewall of each of the first sleeve and the third sleeve.

### BRIEF DESCRIPTION OF THE DRAWINGS

The apparatuses, systems, devices, modules, components, tabs, panels, openings, and containers presented herein may be better understood with reference to the following drawings and description. It should be understood that some elements in the figures may not necessarily be to scale and that emphasis has been placed upon illustrating the principles disclosed herein. In the figures, like-referenced numerals designate corresponding parts/steps throughout the different views.
FIG. 1 illustrates a perspective front-top view of an endless tab according to an example embodiment of the present disclosure, the endless tab in the deployed or folded configuration.
FIG. 2 illustrates a perspective front-bottom view of the endless tab illustrated in FIG. 1.
FIG. 3 illustrates a perspective rear-top view of the endless tab illustrated in FIG. 1.
FIG. 4 illustrates a perspective rear-bottom view of the endless tab illustrated in FIG. 1.
FIG. 5 illustrates a perspective view of the endless tab illustrated in FIG. 1 in an unfolded configuration.
FIG. 6 illustrates a rear elevation view of the endless tab illustrated in FIG. 5 in the unfolded configuration.
FIGS. 7A and 7B illustrate perspective views of welding wire containers configured to utilize the endless tab illustrated in FIG. 1.
FIGS. 8A-8D illustrate the steps for attaching the endless tab illustrated in FIG. 1 to the welding wire container illustrated in FIG. 7A.
FIG. 9 illustrates a top view of the welding wire container illustrated in FIG. 7A equipped with four of the endless tabs like that illustrated in FIG. 1.
FIG. 10 illustrates a perspective view of the endless tab illustrated in FIG. 1 and a welding wire threaded through the endless tab.
FIG. 11 illustrates a top view of the welding wire container illustrated in FIG. 9 that is equipped with four of the endless tabs illustrated in FIG. 1 and a welding wire threaded through each of the endless tabs.
FIG. 12 illustrates a perspective view of one endless tab illustrated in FIG. 1 installed on the welding wire container illustrated in FIG. 11, where a welding wire container is threaded through the endless tab.
FIG. 13A illustrates a front view of an endless system including two welding wire containers similar to the welding wire container illustrated in FIG. 7A.
FIG. 13B illustrates a perspective view of a bridge member of the endless system illustrated in FIG. 13A.
FIGS. 14A-14C illustrate embodiments of endless systems illustrated in FIG. 13A in different operational states.

### DETAILED DESCRIPTION OF THE INVENTION

In the following detailed description, reference is made to the accompanying figures which form a part hereof wherein like numerals designate like parts throughout, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense, and the scope of embodiments is defined by the appended claims.

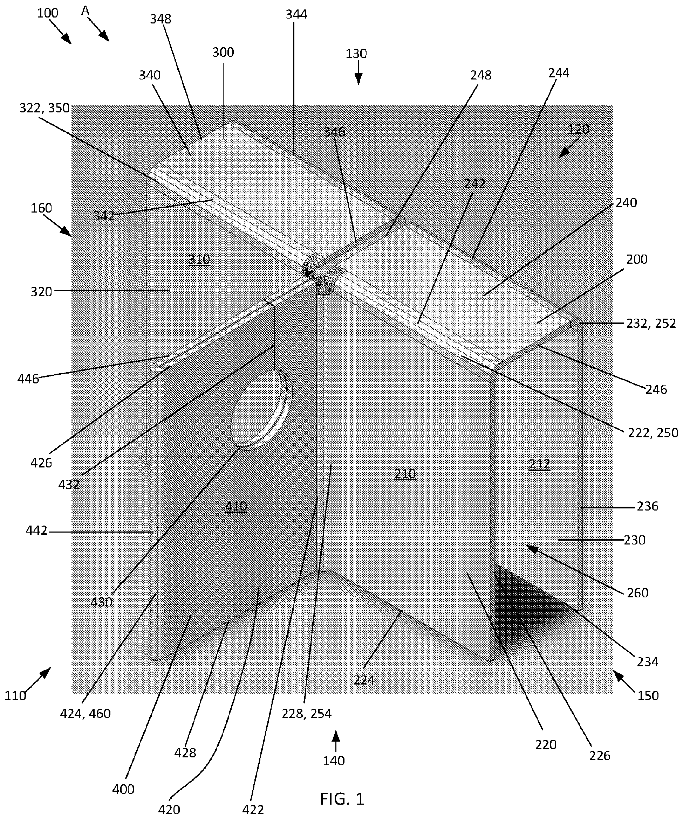

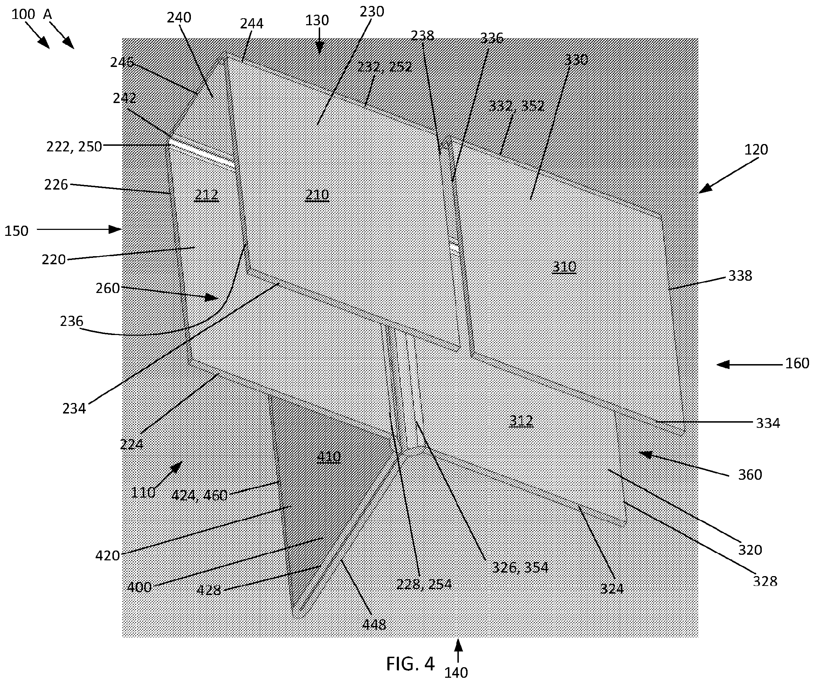

Illustrated in FIGS. 1-4 are perspective views of a singular endless tab 100 that may be utilized as part of an "endless" system of a series of welding wire containers. The endless tab 100 may include a front side 110, an opposite rear side 120, a top side 130 spanning between the front side 110 and the rear side 120, and a bottom side 140 opposite of the top side 130. The bottom side 140 may also span between the front side 110 and the rear side 120. As further illustrated in FIGS. 1-4, the endless tab 100 also includes a first side 150 that may span between the front and rear sides 110, 120 and the top and bottom sides 130, 140, as well as an opposite second side 160 that spans between the front and rear sides 110, 120 and the top and bottom sides 130, 140.

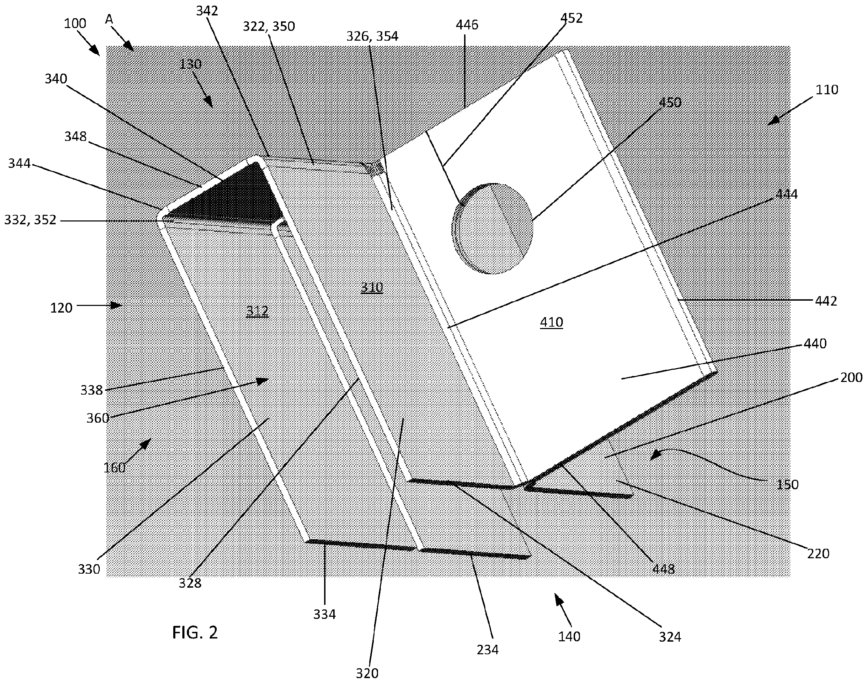

Continuing with FIGS. 1-4, the endless tab 100 may include a first connection portion 200, a second connection portion 300, and an extension portion 400. The first and second connection portions 200, 300 may be disposed on opposing sides of the extension portion 400, and may each have an inverted U-shaped cross-section. More specifically, the first connection portion 200 may be disposed more proximate to the first side 150 than the second side 160, while the second connection portion 300 may be disposed more proximate to the second side 160 than the first side 150. As best illustrated in FIGS. 1 and 2, the extension portion 400 may extend from the front side 110 of the endless tab 100, and may be centrally disposed on the front side 110 of the endless tab 100 such that the extension portion 400 is equidistant from the first and second sides 150, 160 of the endless tab 100. The first connection portion 200 and the second connection portion 300 can be referred to as mounting portions of the endless tab 100. The extension portion 400 can be referred to as guiding portions of the endless tab 100.

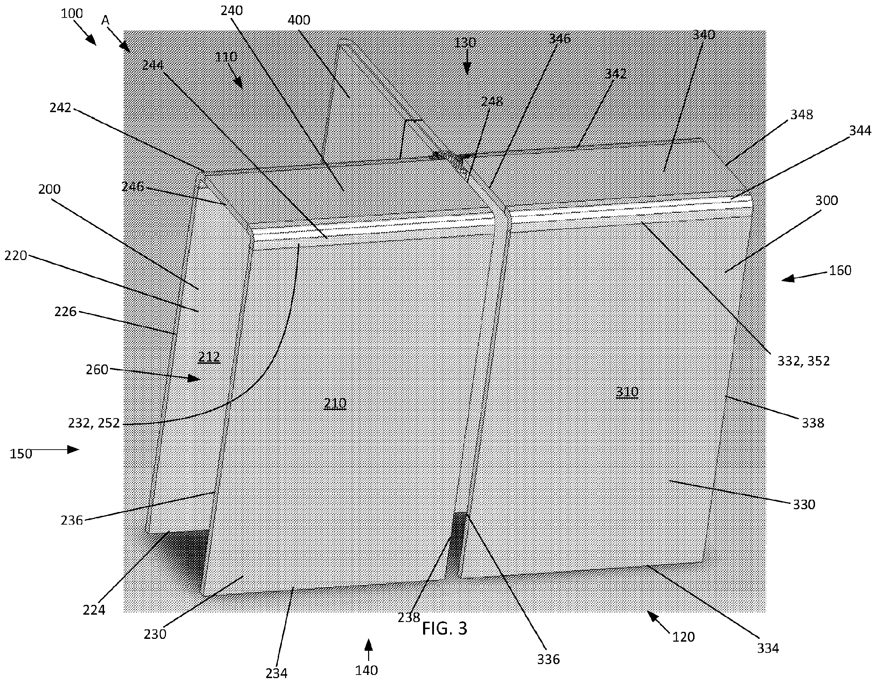

As best illustrated in FIGS. 1, 3, and 4, the first connection portion 200 includes an exterior surface 210 and an opposite interior surface 212. The first connection portion 200 further includes a first or front panel 220, a second or rear panel 230, and a third or top panel 240. The front panel 220 may include a top edge 222, an opposite bottom edge 224, a first edge 226 spanning between the top edge 222 and the bottom edge 224, and a second edge 228 opposite the first edge 226 that also spans between the top edge 222 and the bottom edge 224. Similar to the front panel 220, the second panel 230 may include a top edge 232, an opposite bottom edge 234, a first edge 236 spanning between the top edge 232 and the bottom edge 234, and a second edge 238 (see FIG. 3) opposite the first edge 236 that also spans between the top edge 232 and the bottom edge 234. The top panel 240 may include a front edge 242, an opposite rear edge 244, a first edge 246 spanning between the front edge 242 and the rear edge 244, and a second edge 248 opposite the first edge 246 that also spans between the front edge 242 and the rear edge 244.

As further illustrated, the top edge 222 of the front panel 220 may be coupled to the front edge 242 of the top panel 240 via a first fold line or living hinge 250. The top edge 232 of the rear panel 230 may be coupled to the rear edge 244 of the top panel 240 via a second fold line or living hinge 252. The front panel 220, rear panel 230, and top panel 240 may be folded along the first and second fold lines 250, 252 such that the front panel 220, rear panel 230, and top panel 240 collectively form an inverted U-shape. The first edges 226, 236, 246 of the front, rear, and top panels 220, 230, 240, respectively, may form the first side 150 of the endless tab 100. Moreover, the portion of the interior surface 212 of the first connection portion 200 disposed at the front panel 220 may face the portion of the interior surface 212 of the first connection portion 200 disposed at the rear panel 230. Thus, with the panels 220, 230, 240 folded along the first and second fold lines 250, 252 and forming the inverted U-shape, the interior surface 212 of the first connection portion 200 at each of the panels 220, 230, 240 may collectively define a cavity or channel 260.

FIGS. 1, 3, and 4 further illustrate that the front panel 220, and specifically the portion of the exterior surface 210 disposed at the front panel 220, may form a portion of the front side 110 of the endless tab 100, while the rear panel 230, and specifically the portion of the exterior surface 210 disposed at the rear panel 230, may form a portion of the rear side 120 of the endless tab 100. As further illustrated, the top panel 240, and specifically the portion of the exterior surface 210 disposed at the top panel 240, may form a portion of the top side 130 of the endless tab 100.

As best illustrated in FIGS. 2, 3, and 4, similar to the first connection portion 200, the second connection portion 300 includes an exterior surface 310 and an opposite interior surface 312. The second connection portion 300 further includes a first or front panel 320, a second or rear panel 330, and a third or top panel 340. Similar to the front panel 220 of the first connection portion 200, the front panel 320 of the second connection panel 300 may include a top edge 322, an opposite bottom edge 324, a first edge 326 spanning between the top edge 322 and the bottom edge 324, and a second edge 328 opposite the first edge 326 that also spans between the top edge 322 and the bottom edge 324. Similar to the second panel 230 of the first connection portion 200, the second panel 330 of the second connection portion 300 may include a top edge 332, an opposite bottom edge 334, a first edge 336 spanning between the top edge 332 and the bottom edge 334, and a second edge 338 opposite the first edge 336 that also spans between the top edge 332 and the bottom edge 334. The top panel 340 of the second connection portion 300 may be similar to the top panel 240 of the first connection portion 200 in that the top panel 340 of the second connection portion 300 may include a front edge 342, an opposite rear edge 344, a first edge 346 spanning between the front edge 342 and the rear edge 344, and a second edge 348 opposite the first edge 346 that also spans between the front edge 342 and the rear edge 344.

As further illustrated, the top edge 322 of the front panel 320 may be coupled to the front edge 342 of the top panel 340 via a third fold line or living hinge 350. The top edge 332 of the rear panel 330 may be coupled to the rear edge 344 of the top panel 340 via a fourth fold line or living hinge 352. The front panel 320, rear panel 330, and top panel 340 of the second connection portion 300 may be folded along the third and fourth fold lines 350, 352 such that the front panel 320, rear panel 330, and top panel 340 collectively form an inverted U-shape. The second edges 328, 338, 348 of the front, rear, and top panels 320, 330, 340, respectively, form the second side 160 of the endless tab 100. Moreover, the portion of the interior surface 312 of the second connection portion 300 disposed at the front panel 320 faces the portion of the interior surface 312 of the second connection portion 300 disposed at the rear panel 330. Thus, with the panels 320, 330, 340 folded along the third and fourth fold lines 350, 352 and forming the inverted U-shape, the interior surface 312 of the second connection portion 300 at each of the panels 320, 330, 340 may collectively define a cavity or channel 360. The channel 360 of the second connection portion 300 may be aligned with the channel 260 of the first connection portion 200.

FIGS. 2, 3, and 4 further illustrate that the front panel 320, and specifically the portion of the exterior surface 310 disposed at the front panel 320, may form a portion of the front side 110 of the endless tab 100, while the rear panel 330, and specifically the portion of the exterior surface 310 disposed at the rear panel 330, may form a portion of the rear side 120 of the endless tab 100. As further illustrated, the top panel 340, and specifically the portion of the exterior surface 310 disposed at the top panel 340, may form a portion of the top side 130 of the endless tab 100.

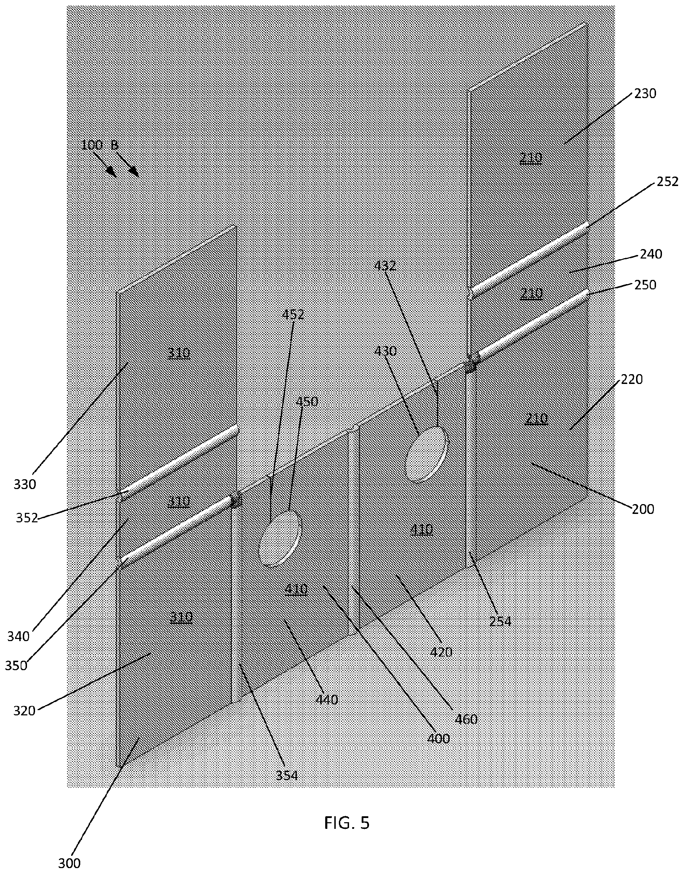

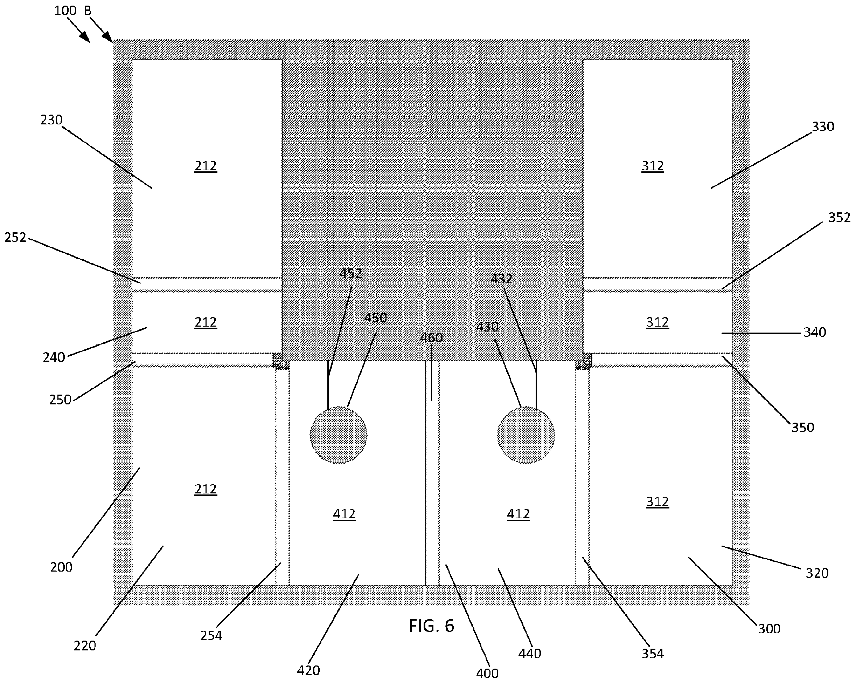

With continued reference to FIGS. 1 and 2, the extension portion 400 may include an exterior surface 410 and an opposite interior surface 412 (best shown in FIGS. 5 and 6) like that of the first and second connection portions 200, 300. The extension portion 400 may further include a first panel 420 and a second panel 440. The first panel 420 may include a first edge 422, an opposite second edge 424, a top edge 426 spanning between the first edge 422 and the second edge 424, as well as a bottom edge 428 opposite the top edge 426 that also spans between the first edge 422 and the second edge 424. Disposed in the first panel 420, and extending through from the exterior surface 410 to the interior surface 412 is an opening 430. The opening 430 may be centrally disposed in the first panel 420, or, as illustrated in FIGS. 1, 2, 5, and 6, may be offset from a central position in the first panel 420. As illustrated, the opening 430 may be disposed more proximate to the first edge 422 than the second edge 424, and more proximate to the top edge 426 than the bottom edge 428. The first panel 420 may also include a slit 432 that upwardly extends from the opening 430 to the top edge 426 of the first panel 420. The slit 432 may extend upwardly from the top edge of the opening 430 such that the slit 432 is offset from the uppermost point of the opening 430. In other words, the slit 432 may extend from the opening 430 such that the slit 432 is offset from being aligned with a central axis of the opening 430.

Similar to the first panel 420 of the extension portion 400, the second panel 440 may include a first edge 442, an opposite second edge 444, a top edge 446 spanning between the first edge 442 and the second edge 444, as well as a bottom edge 448 opposite the top edge 446 that also spans between the first edge 442 and the second edge 444. Disposed in the second panel 440 is an opening 450 like that of the first panel 420, where the opening 450 extends through the second panel 440 from the exterior surface 410 to the interior surface 412. The opening 450 may be centrally disposed in the second panel 440, or, as illustrated in FIGS. 1, 2, 5, and 6 and like that of the opening 430 of the first panel 420, may be offset from a central position in the second panel 440. As illustrated, the opening 450 may be disposed more proximate to the second edge 444 than the first edge 442, and more proximate to the top edge 446 than the bottom edge 448. Also like the first panel 420, the second panel 440 may include a slit 452 that upwardly extends from the opening 450 to the top edge 446 of the second panel 440. The slit 452 may extend upwardly from the top edge of the opening 450 such that the slit 452 is offset from uppermost point of the opening 450. In other words, the slit 452 may extend from the opening 450 such that the slit 452 is offset from being aligned with a central axis of the opening 450.

The first panel 420 of the extension portion 400 may be coupled to the front panel 220 of the first connection portion 200 via a fifth fold line or living hinge 254. More specifically, the second edge 228 of the front panel 220 of the first connection portion 200 may be coupled to the first edge 422 of the first panel 420 of the extension portion 400 via the fifth fold line 254. Similar to the first panel 420, the second panel 440 of the extension portion 400 may be coupled to the front panel 320 of the second connection portion 300 via a sixth fold line or living hinge 354. More explicitly, the first edge 326 of the front panel 320 of the second connection portion 300 may be coupled to the second edge 444 of the second panel 440 of the extension portion 400 via the sixth fold line 354. As further illustrated, the second edge 424 of the first panel 420 of the extension portion 400 may be coupled to the first edge 442 of the second panel 440 of the extension portion 400 via a seventh fold line or living hinge 460.

As illustrated in FIGS. 1 and 2, when the extension portion 400 is folded about the fifth, sixth, and seventh fold lines 254, 354, 460, the extension portion 400 extends forward from the front side 110 of the endless tab 100. In addition, the first and second panels 420, 440 of the extension portion 400 are folded against one another such that portion of the interior surface 412 of the extension portion 400 that corresponds with the first panel 420 is in abutment with the portion of the interior surface 412 of the extension portion 400 that corresponds with the second panel 440. As further illustrated, the opening 430 of the first panel 420 aligns with the opening 450 of the second panel 440 of the extension portion 400, while the slit 432 of the first panel 420 aligns with the slit 452 of the second panel 440 of the extension portion 400.

The endless tab 100 illustrated in FIGS. 1-4 is shown in a folded or deployed configuration A, while the endless tab 100 illustrated in FIGS. 5 and 6 is shown in an unfolded or planar configuration B. FIG. 5 illustrates the exterior surface 210 of the first connection portion 200, the exterior surface 310 of the second connection portion 300, and the exterior surface 410 of the extension portion 400. Conversely, FIG. 6 illustrates the interior surface 212 of the first connection portion 200, the interior surface 312 of the second connection portion 300, and the interior surface 412 of the extension portion 400. When in the unfolded configuration B, the panels 220, 230, 240, 320, 330, 340, 420, 440 of the endless tab 100 collectively form a U-shape.

In order to convert the endless tab 100 from the unfolded configuration B to the folded configuration A, the rear panel 230 of the first connection portion 200 is folded about the second fold line 252 with respect to the top panel 240 of the first connection portion 200. The rear panel 230 of the first connection portion 200 may be folded approximately 90 degrees about the second fold line 252 such that the interior surface 212 of the rear panel 230 of the first connection portion 200 is folded toward the interior surface 212 of the top panel 240 of the first connection portion 200. The rear panel 230 and the top panel 240 of the first connection portion 200 are then folded in unison about the first fold line 250 and with respect to the front panel 220 of the first connection portion 200. The rear panel 230 and the top panel 240 of the first connection portion 200 may be folded in unison approximately 90 degrees about the first fold line 250 such that the interior surfaces 212 of the rear panel 230 and the top panel 240 of the first connection portion 200 are folded toward the interior surface 212 of the front panel 220 of the first connection portion 200.

Similarly, the rear panel 330 of the second connection portion 300 is folded about the fourth fold line 352 with respect to the top panel 340 of the second connection portion 300. The rear panel 330 of the second connection portion 300 may be folded approximately 90 degrees about the fourth fold line 352 such that the interior surface 312 of the rear panel 330 of the second connection portion 300 is folded toward the interior surface 312 of the top panel 340 of the second connection portion 300. The rear panel 330 and the top panel 340 of the second connection portion 300 are then folded in unison about the third fold line 350 and with respect to the front panel 320 of the second connection portion 300. The rear panel 330 and the top panel 340 of the second connection portion 300 may be folded in unison approximately 90 degrees about the third fold line 350 such that the interior surfaces 312 of the rear panel 330 and the top panel 340 of the second connection portion 300 are folded toward the interior surface 312 of the front panel 320 of the second connection portion 300.

With the panels 220, 230, 240, 320, 330, and 340 of the first and second connection portions 200 and 300 folded about their respective fold lines 250, 252, 350, and 352, the entire first connection portion 200 may be folded about the fifth fold line 254 with respect to the first panel 420 of the extension portion 400 while the entire second connection portion 300 may be folded about the sixth fold line 354 with respect to the second panel 420 of the extension portion 400. In other words, the entire first connection portion 200 may be folded approximately 90 degrees about the fifth fold line 254 such that the exterior surface 210 of the front panel 220 of the first connection portion 200 is folded toward the exterior surface 410 of the first panel 420 of the extension portion 400. Furthermore, the entire second connection portion 300 may be folded approximately 90 degrees about the sixth fold line 354 such that the exterior surface 310 of the front panel 320 of the second connection panel 300 is folded toward the exterior surface 410 of the second panel 440 of the extension portion 400.

Finally, the first panel 420 of the extension portion 400 and the first connection portion 200 may be folded in unison about the seventh fold line 460 with respect to the second panel 440 of the extension portion 400 and the second connection portion 300. More specifically, the interior surface 412 of the first panel 420 of the extension portion 400 may be folded approximately 180 degrees toward the interior surface 412 of the second panel 440 of the extension portion 400 such that the first and second panels 420, 440 of the extension portion 400 come into abutment with one another at their respective interior surfaces 412. In some embodiments, the endless tab 100 may be retained in the folded configuration A via adhesives, bonding, or other attachment mechanisms (e.g., staples, fasteners, clips, etc.) that retain the first panel 420 of the extension portion 400 in abutment with the second panel 440 of the extension portion 400. For example, a glue, epoxy, double sided tape, or other type of adhesive or bonding agent may be applied to the interior surface 412 of the extension portion 400 to retain the first and second panels 420, 440 of the extension portion 400 in abutment with one another.

The above recitation of the steps for converting the endless tab 100 from the unfolded configuration B to the folded configuration A is an example of one conversion process and is not intended to limit the various ways in which the endless tab 100 may be converted from the unfolded configuration B to the folded configuration A, or vice versa. Thus, the folding steps described above may be performed in any order, or may not be entirely performed. Furthermore, the panels 220, 230, 240, 320, 330, 340, 420, and 440 may be folded any amount or to any degree about their respective fold lines 250, 252, 254, 350, 352, 354, and 460 and with respect to the other panels 220, 230, 240, 320, 330, 340, 420, and 440.

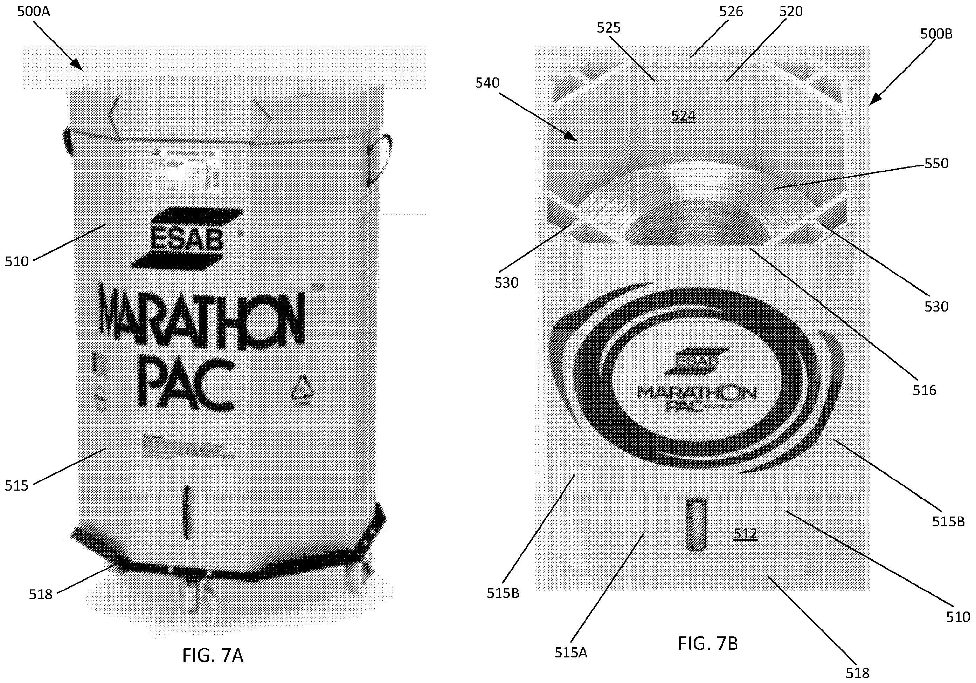

Turning to FIGS. 7A and 7B, illustrated are two examples of the types of bulk welding wire containers 500A, 500B to which the endless tab 100 may be affixed. The first bulk welding wire container 500A illustrated is an example embodiment of a bulk welding wire container having a regular octagon cross-sectional shape, while the second bulk welding wire container 500B illustrated is an example embodiment of a bulk welding wire container having an irregular octagonal cross-sectional shape. The first and second bulk welding wire containers 500A, 500B represent only two examples of the types of bulk welding wire containers to which the endless tab 100 may be affixed. As a further examples, the endless tab 100 illustrated in FIGS. 1-6 may also be affixed to bulk welding wire containers having a circular cross-sectional shape, a square cross-sectional shape, a rectangular cross-sectional shape, a pentagonal cross-sectional shape, a triangular cross-sectional shape, or any other cross-sectional shape.

As best illustrated in FIGS. 7B, the bulk welding wire container 500B may contain an outer sleeve 510 and an inner sleeve 520 disposed within the outer sleeve 510. The outer sleeve 510 may include an exterior surface 512 and an opposite interior surface (not shown). The outer sleeve 510 may further include a series of sidewalls 515 that include a first set of sidewalls 515A and a second set of sidewalls 515B, each of which contains a top edge 516 and an opposite bottom edge 518. As illustrated, the outer sleeve 510 includes four sidewalls or sidewall portions 515 of the first set of sidewalls 515A and four sidewalls 515 of the second set of sidewalls 515B. The first set of sidewalls 515A may have a first width and the second set of sidewalls 515B may have a second width that is less than the first width. The difference in the widths of the first and second sets of sidewalls 515A, 515B, along with their alternating arrangement, gives the outer sleeve 510 of the second bulk welding wire container 500B an irregular octagonal cross-sectional shape. In one embodiment, the sidewalls 515A and 515B are formed of a unitary piece of material that is folded to form each of the sidewalls 515A and 515B.

As further illustrated in FIG. 7B, the inner sleeve 520 may include an exterior surface 522 and an opposite interior surface 524. The inner sleeve 520 may further include a series of sidewalls or sidewall portions 525 that each contain a top edge 526 and an opposite bottom edge 528. Unlike the sidewalls 515 of the outer sleeve 510, the sidewalls 525 of the inner sleeve 520 may each have the same width. In one embodiment, the sidewalls 525 are formed of a unitary piece of material that is folded to form each of the sidewalls 525. Thus, the inner sleeve 520 may have a regular octagonal cross-sectional shape that fits within the irregular octagonal cross-sectional shape of the outer sleeve 510. The inner sleeve 520 of the second bulk welding wire container 500B may be disposed within the outer sleeve 510 such that the exterior surface of the inner sleeve 520 abuts the interior surface of the outer sleeve 510 at the first set of sidewalls 515A, but such that the exterior surface of the inner sleeve 520 is spaced from the interior surface of the second set of sidewalls 515B. The second bulk welding wire container 500B may also contain four supports 530 that are disposed between the exterior surface of the inner sleeve 520 and the interior surface of the second set of sidewalls 515B. Each of the supports 530 has a trapezoidal prism shape. The inner sleeve 520 may further define a cavity 540 within which a bulk welding wire coil 550 may be disposed.

While the first bulk welding wire container 500A is illustrated in FIG. 7A with a lid, the first bulk welding wire container 500A has a generally similar arrangement to that of the second bulk welding wire container 500B. Namely, the first bulk welding wire container 500A includes an inner sleeve 520 disposed within an outer sleeve 510. However, due to each of the sidewalls 515 of the outer sleeve 510 of the bulk welding wire container 500A having the same width as one another (i.e., the sidewalls are all equal in size which gives the first bulk welding wire container 500A its regular octagonal cross-sectional shape), the first bulk welding wire container 500A may not contain any supports 530. Instead, the exterior surface of the inner sleeve 520 may be in abutment with the interior surface of the outer sleeve 510 at each of the sidewalls 515 of the outer sleeve 510.

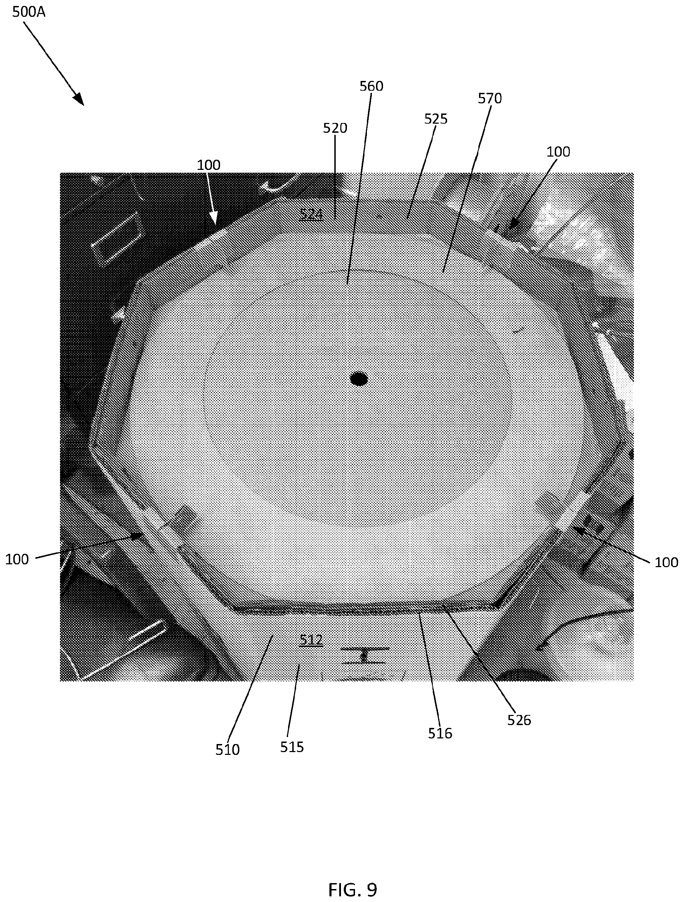

As later illustrated in FIGS. 9, 11, and 12, the bulk welding wire containers 500A, 500B may further include an insert 560 (e.g., constructed from cardboard or any other material) disposed atop the welding wire coil 550 and/or a ring 570 (e.g., also constructed from cardboard or any other material) disposed atop the welding wire coil 550 or the insert 560. The bulk welding wire containers 500A, 500B may also include a decoiling cone 580 that is disposed atop the welding wire coil 550, the insert 560, and/or the ring 570.

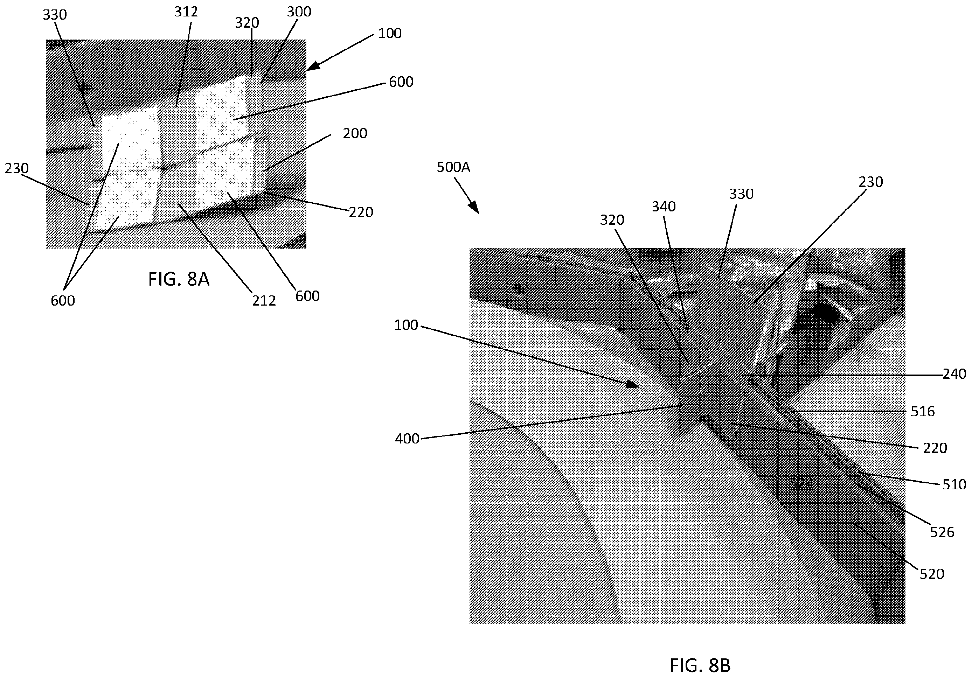

Turning to FIGS. 8A-8D, illustrated are exemplary methods for affixing or attaching the endless tab 100 to bulk welding wire container 500A and/or 500B. As best illustrated in FIG. 8A, an adhesive or other bonding agent 600 may be applied to the interior surfaces 212, 312 of the first and second connection portions 200, 300 of endless tab 100, respectively. More specifically, the adhesive 600 may be applied to the interior surface 212 of the first connection portion 200 at the front and rear panels 220, 230, and may be applied to the interior surface 312 of the second connection portion 300 at the front and rear panels 320, 330. In the illustrated embodiment, the adhesive 600 may be a double sided tape. However, in other embodiments, the adhesive 600 may be any other type of adhesive or bonding agent know or later developed.

Turning to FIG. 8B, illustrated is the endless tab 100 initially being coupled or attached to the interior surface 524 of the inner sleeve 520 of a bulk welding wire container 500A via the adhesive 600 on the interior surfaces 212, 312 at the front panels 220, 320 of the first and second connection portions 200, 300, respectively. The endless tab 100 may be coupled to the bulk welding wire container 500A such that the extension portion 400 of the endless tab 100 extends into the cavity 540 of the bulk welding wire container 500A from the interior surface 524 of the inner sleeve 520. As shown in FIG. 8B, at this step, the rear panels 230, 330 and the top panels 240, 340 of the first connection portion 200 and the second connection portion 300, respectively, have not yet been coupled to the outer sleeve 510 or the inner sleeve 520 of the bulk welding wire container 500A.

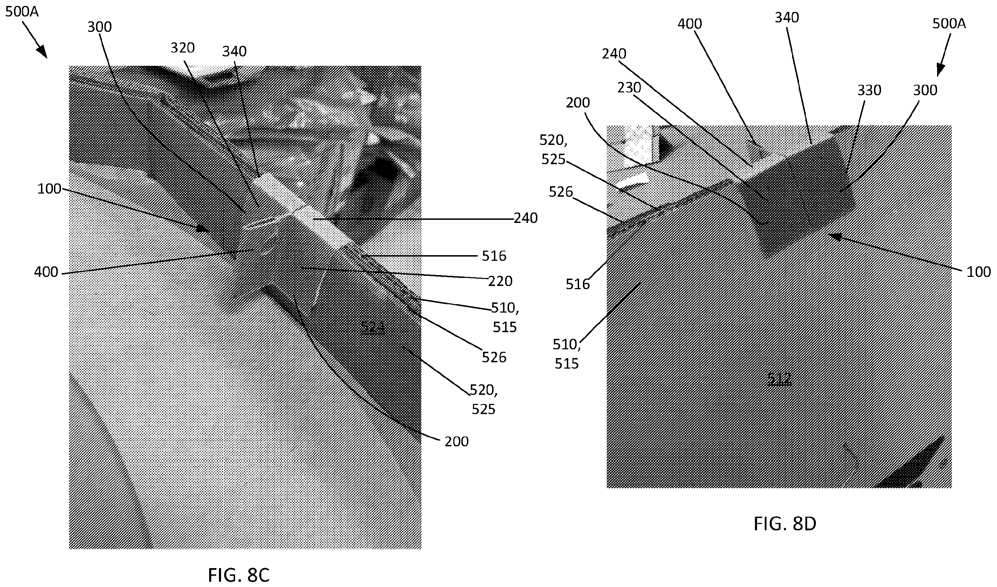

As illustrated in FIGS. 8C and 8D, and with the front panels 220, 320 of the first and second connection portions 200, 300, respectively, being coupled to the interior surface 524 of the inner sleeve 520 of the bulk welding wire container 500A, the first and second connection portions 200, 300 are folded over the top edges 516, 526 of the outer sleeve 510 and the inner sleeve 520, respectively. The top panels 240, 340 of the first and second connection portions 200, 300, respectively, extend over the top edges 516, 526 of the outer sleeve 510 and the inner sleeve 520, respectively, while the rear panels 230, 330 of the first and second connection portions 200, 300, respectively, extend along the exterior surface 512 of the outer sleeve 510. The endless tab 100 may be further coupled or attached to the bulk welding wire container 500A via the adhesive 600 disposed on the interior surfaces 212, 312 at the rear panels 230, 330 of the first and second connection portions 200, 300, respectively.

While not illustrated, the endless tab 100 may be coupled to a bulk welding wire container that contains only a single sleeve or an outer sleeve 510 (i.e., only contains an outer sleeve instead of both an inner sleeve and an outer sleeve) with the front panels 220, 320 of the first and second connection portions 200, 300, respectively, being coupled to the interior surface of the outer sleeve 510, the rear panels 230, 330 of the first and second connection portions 200, 300, respectively, being coupled to the exterior surface 512 of the outer sleeve 510, and the top panels 240, 340 of the first and second connection portions 200, 300, respectively, extending over only the top edge 516 of the outer sleeve 510.

In another embodiment, when the bulk welding wire container contains both an inner sleeve 520 and an outer sleeve 510, but where the inner sleeve 520 is shorter in height than the outer sleeve 510, the endless tab 100 may be coupled to only the outer sleeve 510 in the same manner as if the bulk welding wire container contains only the single sleeve (i.e., contains only the outer sleeve 510). In addition, when the bulk welding wire container contains both the inner sleeve 520 and the outer sleeve 510 having the same height (e.g., the top edges 516, 526 of the outer and inner sleeves 510, 520, respectively, are disposed adjacent one another and at the same height from the support surface like that illustrated in FIGS. 8A-8D), the endless tab 100 may be secured to only the inner sleeve 520. In this example arrangement, the endless tab 100 may be coupled to the inner sleeve 520 with the front panels 220, 320 of the first and second connection portions 200, 300, respectively, being coupled to the interior surface 524 of the inner sleeve 520, the rear panels 230, 330 of the first and second connection portions 200, 300, respectively, being coupled to the exterior surface 522 of the inner sleeve 520 and sandwiched between the exterior surface 522 of the inner sleeve 520 and the interior surface of the outer sleeve 510, and the top panels 240, 340 of the first and second connection portions 200, 300, respectively, extending over only the top edge 526 of the inner sleeve 520.

For embodiments like that of the second bulk welding wire container 500B, where supports 530 are disposed between the exterior surface 522 of the inner sleeve 520 and the interior surface 514 of the outer sleeve 510, the endless tab 100 may extend over both the inner sleeve 520 and the supports 530 in a similar manner to that illustrated in FIGS. 8A-8D. In other words, the endless tab 100 may be coupled to the inner sleeve 520 with the front panels 220, 320 of the first and second connection portions 200, 300, respectively, being coupled to the interior surface of the inner sleeve 520 via the adhesive, and the rear panels 230, 330 of the first and second connection portions 200, 300, respectively, being coupled to the support 530 via the adhesive 600. The top panels 240, 340 of the first and second connection portions 200, 300, respectively, may extend over the top edge 526 of the inner sleeve 520 and the top edge of the support 530.

Turning to FIG. 9, illustrated is a top view of the bulk welding wire container 500A equipped with four endless tabs 100. As illustrated, the endless tabs 100 are spaced equidistantly about the top edges 516, 526 of the outer and inner sleeves 510, 520, respectively. Thus, the bulk welding wire container 500A contains four sidewalls 515, 525 of the outer sleeve 510 and the inner sleeve 520, respectively, upon which an endless tab 100 is affixed, and four sidewalls 515, 525 of the outer sleeve 510 and the inner sleeve 520, respectively, that do not contain an endless tab 100. The endless tabs 100 are disposed on the sidewalls 515, 525 such that sidewalls 515, 525 alternate between sidewalls 515, 525 that do not contain an endless tab 100 and sidewalls 515, 525 upon which an endless tab 100 is affixed. The design of the endless tab 100 described herein combined with the method for attaching or affixing the endless tab 100 to a bulk welding wire container enables a bulk welding wire container to be customized with any number of endless tabs 100 that are best suited for the gauge of the welding wire disposed within the bulk welding wire container. Moreover, the endless tabs 100 may be affixed along the top edges of the sleeves of the bulk welding wire container in any position that best suits the welding wire coil disposed within the bulk welding wire container. For example, the bulk welding wire container 500A depicted in FIG. 9 may be equipped with eight endless tabs 100 such that an endless tab 100 is affixed to each of the sidewalls 515, 525. In another example, the bulk welding wire container 500A depicted in FIG. 9 may be equipped with a plurality of endless tabs 100, but where multiple endless tabs are simultaneously affixed on one of the sidewalls 515, 525.

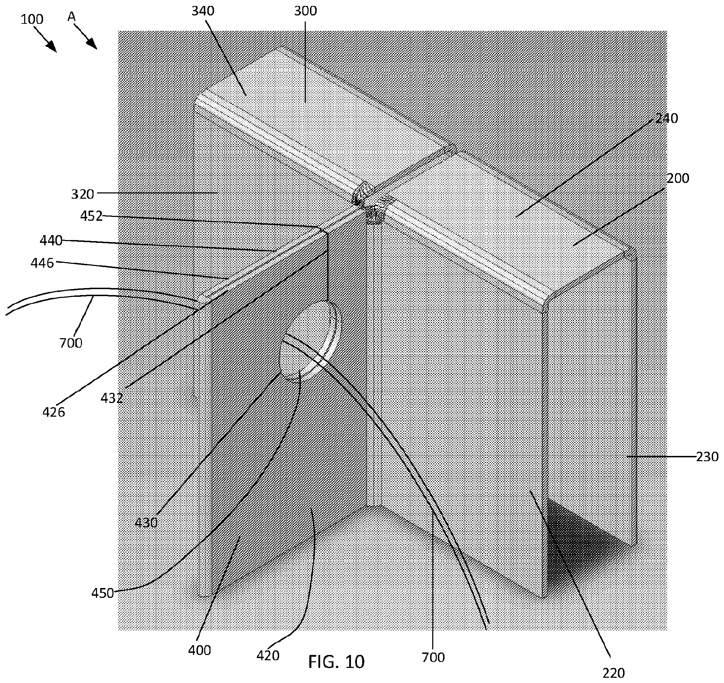

Turning to FIG. 10, illustrated is a welding wire 700 disposed within the openings 430, 450 of the extension portion 400 of the endless tab 100 such that the extension portion 400 of the endless tab 100 supports the welding wire 700. The welding wire 700 may disposed within the openings 430, 450 of the extension portion 400 in any number of manners. For example, an end of the welding wire 700 may be inserted, threaded, or passed through the openings 430, 450 of the extension portion 400, and then the welding wire 700 may be pulled or threaded through the openings 430, 450 of the extension portion 400 to distance the end of the welding wire 700 from the openings 430, 450 of the extension portion 400 of the endless tab 100. In another example, a user may flex a portion of the extension portion 400 such that the portions of the extension portion 400 proximate to the slits 432, 452 separate from one another to form a pathway or channel between the top edges 426, 446 of the first and second panels 420, 440, respectively, of the extension portion 400 and the openings 430, 450 of the extension portion 400. With the slits 432, 452 transitioned into a channel, a user may slide a portion of the welding wire 700 beyond the top edges 426, 446 of the first and second panels 420, 440, respectively, through the channel formed by the slits 432, 452, and into the openings 430, 450 of the extension portion 400 of the endless tab 100.

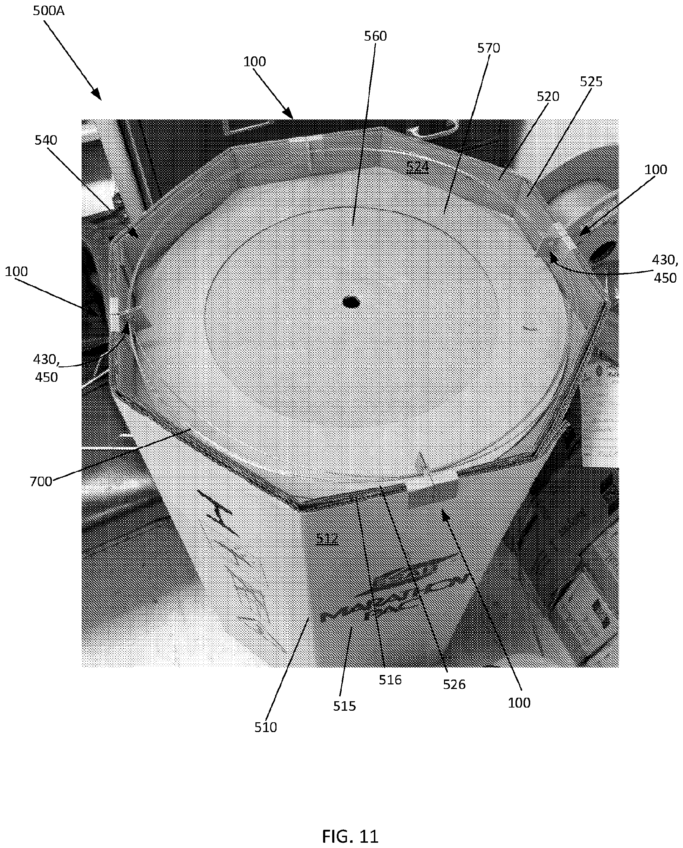

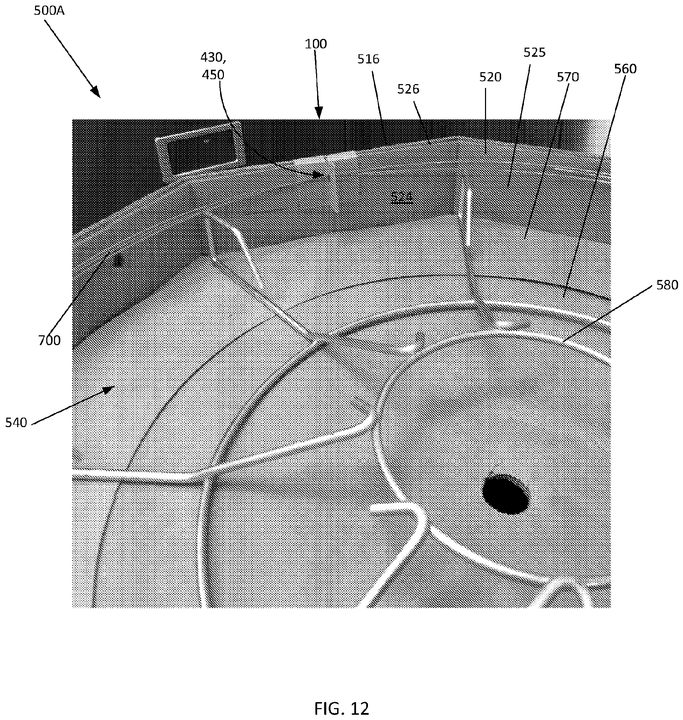

Turning to FIG. 11, and with continued reference to FIGS. 9 and 10, illustrated is a bulk welding wire container 500A equipped with four equally spaced endless tabs 100, like that of FIG. 9, and where a welding wire 700 is looped through or passed through each of the depicted endless tabs 100 multiple times. More specifically, the welding wire 700 is looped through or passed through the openings 430, 450 of each of the endless tabs 100 illustrated in FIG. 11. As shown in FIG. 11, and further shown in FIG. 12, when the welding wire 700 is looped through the endless tabs 100, the welding wire 700 is disposed within the cavity 540 of the bulk welding wire container 500A proximate to the top edges 516, 526 of the outer and inner sleeves 510, 520, respectively.

As further illustrated in FIG. 12, the welding wire 700 looped through the endless tabs 100 may be disposed above the decoiling cone 580 that is disposed atop the cardboard ring 570 and cardboard insert 560, which are disposed atop a welding wire coil 550 (shown in FIG. 7B). The welding wire 700 disposed proximate to the top edges 516, 526 of the outer and inner sleeves 510, 520, respectively, may be both a beginning or starting end and an ending or finishing end of the welding wire coil 550 disposed within the bulk welding wire container 500A. Thus, the endless tabs 100 may be configured to position of the starting and finishing ends of the welding wire coil 550 near the top of the cavity of a bulk welding wire container to facilitate installation and operation of the bulk welding wire container within an endless system 800 as detailed below.

In addition, with the endless tabs 100 be separate components from the inner sleeve 520 (i.e., the endless tabs 100 being a standalone component and not integrated into the inner sleeve 520), each bulk welding wire container 500A, 500B may be customized to the gauge of the welding wire coil 550 disposed within the bulk welding wire container 500A, 500B. This eliminates the need to manufacture different inner sleeves 520 for each gauge of a welding wire. The endless tabs 100 being separate components from the inner sleeve 520 further enables the endless tabs 100 to be constructed from different materials, or from a different type of corrugated material, from that of the inner sleeve 520. In some instances, the endless tabs 100 may be constructed from a corrugated material that is more robust and stronger than that of the corrugated material of the inner sleeve 520.

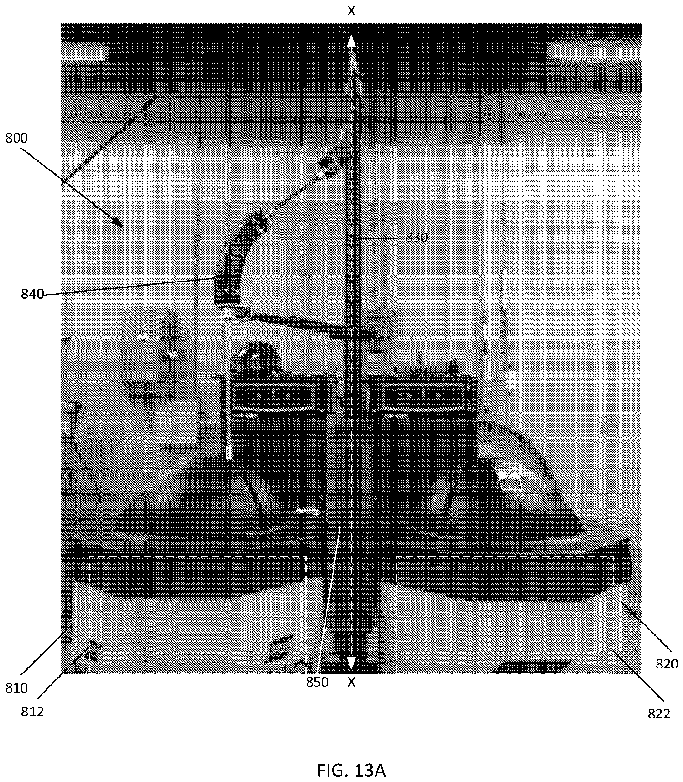

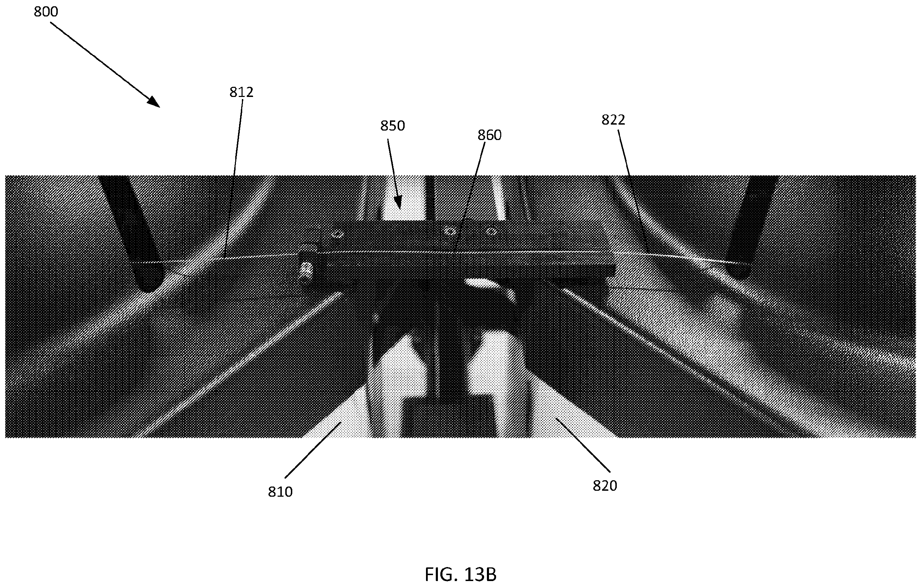

Turning to FIGS. 13A and 13B, and with continued reference to FIGS. 1-6, 7A, 7B, 8A-8D, and 9-12, illustrated is an endless system 800 in operation with two bulk welding wire containers 810, 820, which may be similar to the bulk welding wire container 500A illustrated in FIGS. 7A, 8A-8D, and 9-12. While FIGS. 13A and 13B illustrates two welding wire containers 810, 820 that are similar to the bulk welding wire container 500A illustrated in FIGS. 7A, 8A-8D, and 9-12, other types or styles of bulk welding wire containers, such as the bulk welding wire container 500B illustrated in FIG. 7B, may be utilized with the endless system 800. Each of the bulk welding wire containers 810, 820 may contain a welding wire coil 812, 822, respectively, and, while not illustrated, may be equipped with one or more endless tabs 100 to position the starting and finishing ends of the respective welding wire coils 812, 822 near the top of the cavities of the bulk welding wire containers 810, 820.

As further illustrated in FIGS. 13A and 13B, the endless system 800 includes at least an upwardly extending support post 830 to which a wire extraction arm 840 is rotatably coupled. The wire extraction arm 840 may be configured to rotate about vertical axis X between the first bulk welding wire container 810 and the second bulk welding wire container 820 or vice versa. The wire extraction arm 840 may be configured to extract and guide wire from the bulk welding wire containers 810, 820 to a welding apparatus such as a welding torch (not shown).

As best illustrated in FIG. 13B, the endless system 800 may further include a welding wire bridge 850 coupled to both of the bulk welding wire containers 810, 820. The finishing end of the welding wire coil 812 in the first bulk welding wire container 810 may be joined to the beginning end of the welding wire coil 822 in the second bulk welding wire container 820, and this joined segment 860 of wire may be disposed along the welding wire bridge 850. The welding wire bridge 850 may be configured to support the joined segment 860 until the wire extraction arm 840 transitions from the first bulk welding wire container 810 to the second bulk welding wire container 820. The joined segment 860 may be formed by butt welding the finishing end of the welding wire coil 812 in the first bulk welding wire container 810 to the beginning end of the welding wire coil 822 in the second bulk welding wire container 820.

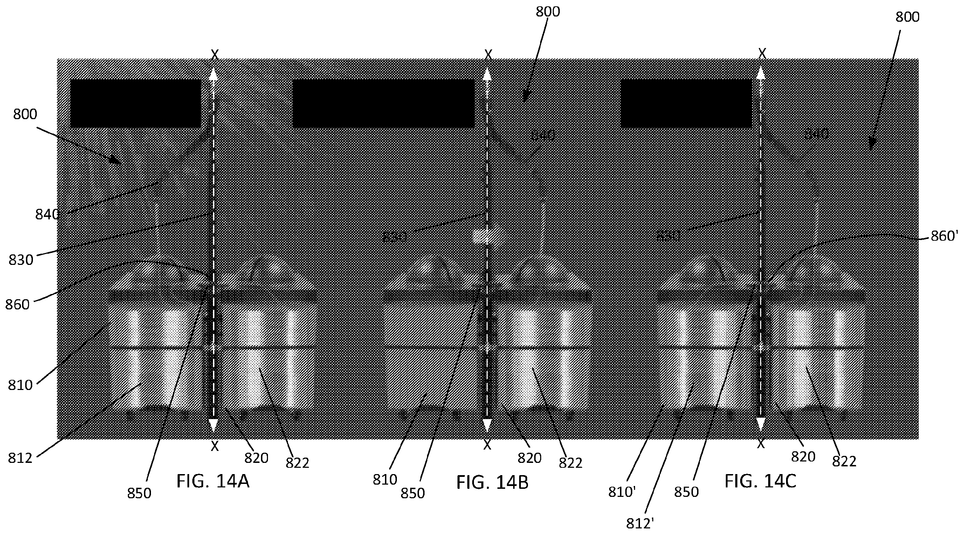

Turning to FIGS. 14A-14C, illustrated are various operating states of the endless system 800. As illustrated in FIG. 14A, the finishing end of the welding wire coil 812 of the first bulk welding wire container 810 is coupled to the starting end of the welding wire coil 822 of the second bulk welding wire container 820 through the formation of the joined segment 860. Moreover, the wire extraction arm 840 has been rotated about the rotational axis X and the upwardly extending support post 830 to be disposed over the first bulk welding wire container 810. In this position, the wire extraction arm 840 is configured to extract welding wire from the welding wire coil 812 within the first bulk welding wire container 810.

As shown in FIG. 14B, once the welding wire coil 812 has been fully consumed, and because of the joined segment 860 between the two welding wire coils 812, 822, the wire extraction arm 840 rotates about the rotatable axis X from the first bulk welding wire coil 810 to the second bulk welding wire coil 820. After the wire extraction arm 840 extracts and delivers the joined segment 860, the wire extraction arm 840, when positioned over the second bulk welding wire container 820, is configured to extract welding wire from the welding wire coil 822 within the second bulk welding wire container 820.

As illustrated in FIG. 14C, as the welding wire coil 822 is being consumed, and with the wire extraction arm 840 being disposed over the second bulk welding wire container 820, a user may remove the empty first bulk welding wire container 810 and install a new first bulk welding wire container 810° that contains a new welding wire coil 812'. The starting end of the new welding wire coil 812' of the new first bulk welding wire container 810' may be joined with the finishing end of the welding wire coil 822 of the second bulk welding wire container 820 by forming a new joined segment 860'. This process may be repeated until a user operating a welding torch, or until a robotic welder, is no longer performing a welding operation. Thus, the endless system 800 provides a continuous and seemingly endless supply of welding wire to a welding torch (e.g., handheld, robotic, etc.), which minimizes downtime of the welding operation. The endless tabs 100 disclosed herein facilitate a more efficient, sustainable, and customizable bulk welding wire container 500A, 500B, 810, and 820 for use in an endless system 800.

While the apparatuses presented herein have been illustrated and described in detail and with reference to specific embodiments thereof, it is nevertheless not intended to be limited to the details shown, since it will be apparent that various modifications and structural changes may be made therein without departing from the scope of the claims.

## Claims

1. A continuous wire system, comprising:
a first wire container (810) having a first sleeve (510) defining a first cavity (540), the wire container including a first tab (100) mounted to the first sleeve, the first tab including a first connection portion (200), a second connection portion (300), and a first extension portion (400) coupled to and extending away from each of the first connection portion and the second connection portion, the first extension portion including an opening (430,450) formed therein, the first connection portion and the second connection portion being coupled to the first sleeve;
a first wire (700) disposed in the first cavity (540) of the first wire container (810), at least a portion of the first wire inserted into the opening (430,450) of the first extension portion (400) and extending therethrough;
a second wire container (820) having a second sleeve (510) defining a second cavity (540); and
a second wire (700) disposed in the second cavity (540) of the second wire container (820), wherein the second wire is connected to the first wire (700);
wherein the first tab (100) is formed of a single piece of material, and the first connection portion (200), the second connection portion (300), and the first extension portion (400) are different sections of the single piece of material; and
**characterized in that**
the first connection portion is coupled to the first extension portion by a first living hinge (254), and the second connection portion (300) is coupled to the first extension portion (400) by a second living hinge (354).

2. The continuous wire system of claim 1, wherein the first wire (700) is arranged in a coiled configuration in the first wire container (810), and the second wire (700) is arranged in a coiled configuration in the second wire container (820).

3. The continuous wire system of claim 1, wherein the first wire container (810) further comprises:
a second tab (100) including a third connection portion (200), a fourth connection portion (300), and a second extension portion (400), the third connection portion and fourth connection portion being coupled to the second sleeve (510), the second tab being coupled to the second sleeve at a location spaced apart from the first tab (100), the second extension portion including an opening (430,450) formed therein, wherein at least a portion of the first wire (700) is inserted into the opening of the second extension portion and extends therethrough.

4. The continuous wire system of claim 3, wherein multiple portions of the first wire (700) extend through the opening (430,450) of the first extension portion (400) simultaneously, and multiple portions of the first wire extend through the opening (430,450) of the second extension portion (400) simultaneously.

5. The continuous wire system of claim 1, wherein the first extension portion (400) has a slit (432,452) formed therein, the slit is in communication with the opening (430,450) in the first extension portion, and the slit is configured so that the first wire (700) can pass therethrough to the opening of the first extension portion.

6. The continuous wire system of claim 1, wherein the first extension portion (400) includes a first panel (420) and a second panel (440), the second panel being coupled to the first panel by a third living hinge (460) that permits the second panel and the first panel to be folded so they are adjacent each other.

7. The continuous wire system of claim 1, wherein the piece of material comprises cardboard and has a collapsed configuration and a folded configuration, and the piece of material is flat in its collapsed configuration.

8. The continuous wire system of claim 1, wherein the first wire container (810) has a third sleeve (520), the third sleeve being located in the first sleeve (510), each of the first sleeve and the third sleeve has at least one sidewall (515,525), and the first tab (100) is coupled to a sidewall of each of the first sleeve and the third sleeve.

## Patentansprüche

1. Ein kontinuierliches Drahtsystem, das Folgendes beinhaltet:
einen ersten Drahtbehälter (810) mit einer ersten Hülse (510), die einen ersten Hohlraum (540) definiert, wobei der Drahtbehälter eine erste Lasche (100) umfasst, die an der ersten Hülse montiert ist, wobei die erste Lasche einen ersten Verbindungsabschnitt (200), einen zweiten Verbindungsabschnitt (300) und einen ersten Verlängerungsabschnitt (400) umfasst, der jeweils mit dem ersten Verbindungsabschnitt und dem zweiten Verbindungsabschnitt gekoppelt ist und sich von diesen weg erstreckt, wobei der erste Verlängerungsabschnitt eine darin ausgebildete Öffnung (430, 450) umfasst, wobei der erste Verbindungsabschnitt und der zweite Verbindungsabschnitt mit der ersten Hülse gekoppelt sind;
einen ersten Draht (700), der in dem ersten Hohlraum (540) des ersten Drahtbehälters (810) angeordnet ist, wobei mindestens ein Abschnitt des ersten Drahts in die Öffnung (430, 450) des ersten Verlängerungsabschnitts (400) eingeführt ist und sich durch diese hindurch erstreckt;
einen zweiten Drahtbehälter (820) mit einer zweiten Hülse (510), die einen zweiten Hohlraum (540) definiert; und
einen zweiten Draht (700), der in dem zweiten Hohlraum (540) des zweiten Drahtbehälters (820) angeordnet ist, wobei der zweite Draht mit dem ersten Draht (700) verbunden ist;
wobei die erste Lasche (100) aus einem einzigen Materialstück gebildet ist und der erste Verbindungsabschnitt (200), der zweite Verbindungsabschnitt (300) und der erste Verlängerungsabschnitt (400) unterschiedliche Sektionen des einzigen Materialstücks sind; und
**dadurch gekennzeichnet, dass**
der erste Verbindungsabschnitt durch ein erstes Filmscharnier (254) mit dem ersten Verlängerungsabschnitt gekoppelt ist und der zweite Verbindungsabschnitt (300) durch ein zweites Filmscharnier (354) mit dem ersten Verlängerungsabschnitt (400) gekoppelt ist.

2. Kontinuierliches Drahtsystem gemäß Anspruch 1, wobei der erste Draht (700) in einer gewickelten Konfiguration in dem ersten Drahtbehälter (810) eingerichtet ist und der zweite Draht (700) in einer gewickelten Konfiguration in dem zweiten Drahtbehälter (820) eingerichtet ist.

3. Kontinuierliches Drahtsystem gemäß Anspruch 1, wobei der erste Drahtbehälter (810) ferner Folgendes beinhaltet:
eine zweite Lasche (100), die einen dritten Verbindungsabschnitt (200), einen vierten Verbindungsabschnitt (300) und einen zweiten Verlängerungsabschnitt (400) umfasst, wobei der dritte Verbindungsabschnitt und der vierte Verbindungsabschnitt mit der zweiten Hülse (510) gekoppelt sind, wobei die zweite Lasche an einer Stelle, die von der ersten Lasche (100) beabstandet ist, mit der zweiten Hülse gekoppelt ist, wobei der zweite Verlängerungsabschnitt eine darin ausgebildete Öffnung (430, 450) umfasst, wobei mindestens ein Abschnitt des ersten Drahts (700) in die Öffnung des zweiten Verlängerungsabschnitts eingeführt ist und sich durch diese hindurch erstreckt.

4. Kontinuierliches Drahtsystem gemäß Anspruch 3, wobei sich mehrere Abschnitte des ersten Drahts (700) gleichzeitig durch die Öffnung (430, 450) des ersten Verlängerungsabschnitts (400) erstrecken und sich mehrere Abschnitte des ersten Drahts gleichzeitig durch die Öffnung (430, 450) des zweiten Verlängerungsabschnitts (400) erstrecken.

5. Kontinuierliches Drahtsystem gemäß Anspruch 1, wobei der erste Verlängerungsabschnitt (400) einen darin ausgebildeten Schlitz (432, 452) aufweist, wobei der Schlitz mit der Öffnung (430, 450) in dem ersten Verlängerungsabschnitt in Verbindung steht und der Schlitz so konfiguriert ist, dass der erste Draht (700) durch diesen hindurch zu der Öffnung des ersten Verlängerungsabschnitts gelangen kann.

6. Kontinuierliches Drahtsystem gemäß Anspruch 1, wobei der erste Verlängerungsabschnitt (400) eine erste Platte (420) und eine zweite Platte (440) umfasst, wobei die zweite Platte durch ein drittes Filmscharnier (460) mit der ersten Platte gekoppelt ist, das es ermöglicht, die zweite Platte und die erste Platte so zu falten, dass sie aneinander angrenzen.

7. Kontinuierliches Drahtsystem gemäß Anspruch 1, wobei das Materialstück Karton beinhaltet und eine kollabierte Konfiguration und eine gefaltete Konfiguration aufweist und das Materialstück in seiner kollabierten Konfiguration flach ist.

8. Kontinuierliches Drahtsystem gemäß Anspruch 1, wobei der erste Drahtbehälter (810) eine dritte Hülse (520) aufweist, wobei sich die dritte Hülse in der ersten Hülse (510) befindet, jede der ersten Hülse und der dritten Hülse mindestens eine Seitenwand (515, 525) aufweist und die erste Lasche (100) mit einer Seitenwand jeder der ersten Hülse und der dritten Hülse gekoppelt ist.

## Revendications

1. Un système de fil continu, comprenant :
un premier conteneur de fil (810) ayant un premier manchon (510) définissant une première cavité (540), le conteneur de fil incluant une première languette (100) montée sur le premier manchon, la première languette incluant une première portion de raccordement (200), une deuxième portion de raccordement (300), et une première portion d'extension (400) couplée à et s'étendant en s'éloignant de chacune de la première portion de raccordement et de la deuxième portion de raccordement, la première portion d'extension incluant une ouverture (430, 450) formée dans celle-ci, la première portion de raccordement et la deuxième portion de raccordement étant couplées au premier manchon ;
un premier fil (700) disposé dans la première cavité (540) du premier conteneur de fil (810), au moins une portion du premier fil étant insérée dans l'ouverture (430, 450) de la première portion d'extension (400) et s'étendant à travers celle-ci ;
un deuxième conteneur de fil (820) ayant un deuxième manchon (510) définissant une deuxième cavité (540) ; et
un deuxième fil (700) disposé dans la deuxième cavité (540) du deuxième conteneur de fil (820), où le deuxième fil est raccordé au premier fil (700) ;
où la première languette (100) est formée d'une seule pièce de matériau, et la première portion de raccordement (200), la deuxième portion de raccordement (300), et la première portion d'extension (400) sont différentes sections de cette seule pièce de matériau ; et
**caractérisé en ce que**
la première portion de raccordement est couplée à la première portion d'extension par une première charnière vive (254), et la deuxième portion de raccordement (300) est couplée à la première portion d'extension (400) par une deuxième charnière vive (354).

2. Le système de fil continu de la revendication 1, où le premier fil (700) est agencé dans une configuration enroulée dans le premier conteneur de fil (810), et le deuxième fil (700) est agencé dans une configuration enroulée dans le deuxième conteneur de fil (820).

3. Le système de fil continu de la revendication 1, où le premier conteneur de fil (810) comprend en outre :
une deuxième languette (100) incluant une troisième portion de raccordement (200), une quatrième portion de raccordement (300), et une deuxième portion d'extension (400), la troisième portion de raccordement et la quatrième portion de raccordement étant couplées au deuxième manchon (510), la deuxième languette étant couplée au deuxième manchon à un emplacement espacé de la première languette (100), la deuxième portion d'extension incluant une ouverture (430, 450) formée dans celle-ci, où au moins une portion du premier fil (700) est insérée dans l'ouverture de la deuxième portion d'extension et s'étend à travers celle-ci.

4. Le système de fil continu de la revendication 3, où de multiples portions du premier fil (700) s'étendent à travers l'ouverture (430, 450) de la première portion d'extension (400) simultanément, et de multiples portions du premier fil s'étendent à travers l'ouverture (430, 450) de la deuxième portion d'extension (400) simultanément.

5. Le système de fil continu de la revendication 1, où la première portion d'extension (400) a une fente (432, 452) formée dans celle-ci, la fente est en communication avec l'ouverture (430, 450) dans la première portion d'extension, et la fente est configurée de sorte que le premier fil (700) peut passer à travers celle-ci jusqu'à l'ouverture de la première portion d'extension.

6. Le système de fil continu de la revendication 1, où la première portion d'extension (400) inclut un premier panneau (420) et un deuxième panneau (440), le deuxième panneau étant couplé au premier panneau par une troisième charnière vive (460) qui permet au deuxième panneau et au premier panneau d'être pliés de sorte qu'ils sont adjacents l'un à l'autre.

7. Le système de fil continu de la revendication 1, où la pièce de matériau comprend du carton et a une configuration aplatie et une configuration pliée, et la pièce de matériau est plate dans sa configuration aplatie.

8. Le système de fil continu de la revendication 1, où le premier conteneur de fil (810) a un troisième manchon (520), le troisième manchon étant situé dans le premier manchon (510), chacun du premier manchon et du troisième manchon a au moins une paroi latérale (515, 525), et la première languette (100) est couplée à une paroi latérale de chacun du premier manchon et du troisième manchon.
